# DEMANDE DE BREVET EUROPEEN

(11) **EP 1 541 264 A1**
(43) Date de publication de la demande: **15.06.2005**
(21) Numéro de dépôt: 02774784.9
(22) Date de dépôt: 17.09.2002
(51) Int. Cl.: B23B 27/08

(54) **PANNEAU DE TYPE SANDWICH**

(30) Priorité: 19.07.2002 ES 200201696
(71) Demandeur: Prodema, S.A., 20250 Legorreta (ES)
(72) Inventeur: DEL RIO CARBAJO, Marcos, E-20200 Beasain (ES); OYARZABAL CELARAIN, Juan Ramon, E-20159 Zizurkil (ES)
(74) Mandataire: Urizar Barandiaran, Miguel Angel
(86) Numéro de dépôt international: PCT/ES2002/000439
(87) Numéro de publication internationale: WO 2004/009274

(57) **Abrégé**

Panneau type sandwich formé de plusieurs couches successives avec au recto et verso un film en polymère de nature acrylique transparent auquel a été ajouté un thermoplastique transparent qui n'est pas ou peu soluble dans les dissolvants organiques, les films superficiels présentant sur les deux faces les mêmes coefficients de dilatation thermique, coefficient d'absorption d'humidité et de grammage.

Application dans le domaine de la construction.

## Description

Le sollicitant est fabricant de panneaux de type sandwich utilisant plusieurs couches successives de matériau cellulosique imprégnées de résines polymérisables et qui sont soumises à un pressage pour la fabrication d'un panneau compact.

La surface de ces panneaux se dégrade peu à peu sous l'action des rayons solaires, obligeant donc à ajouter un film superficiel en polymère de nature acrylique, comme par exemple un polyacrylate ou polyméthacrylate ou complexe des deux, qui est transparent à la lumière solaire mais absorbe les rayons UVA (WO 01/05587).

Le sollicitant fabrique ces panneaux pour des revêtements extérieurs avec des conditions de vieillissement accéléré en laboratoire pendant 3.000 heures, ce qui représente une durabilité minimum de 10 ans.

Au cours de l'année 2000, le département commercial du sollicitant a reçu des plaintes inhabituelles de clients: surface des panneaux extérieurs dégradée par des taches blanchâtres, perte de brillance et un net cintrage du panneau.

Le sollicitant a analysé les panneaux endommagés et a découvert de petites fissurations sur le film acrylique superficiel.

Le sollicitant a recommencé les essais dans des conditions extrêmes de pollution environnementale sans obtenir la dégradation superficielle observée sur les panneaux, objet des plaintes des clients.

Le sollicitant en a donc conclu que la cause de la dégradation venait de manière involontaire des clients et notamment des différents produits utilisés pour l'entretien des façades contenant divers dissolvants organiques comme l'alcool éthylique, le méthyléthylcétone, l'hexane, le benzène, le toluène, l'acétate d'éthyle...

En reproduisant la situation en laboratoire, avec des essais d'attaques de ces composés, on a pu apprécier les mêmes détériorations sur la surface du panneau à savoir, perte de brillance, couleur et apparition de fissures détectées par le sollicitant, indiquant l'origine du problème.

Après avoir étudié le problème de fissuration sur le film superficiel, le sollicitant considère que la cause première est un cracking de la structure chimique du polymère acrylique du film superficiel.

Le cracking permet d'observer une rupture des liens chimiques du polymère acrylique ou complexe acrylique par l'attaque des dissolvants organiques.

Après de nombreux essais, le sollicitant est arrivé à la conclusion suivante : la solution au problème consiste à ce que le polymère acrylique se restructure avec l'introduction d'un autre polymère qui ne se dissout pas dans les dissolvants organiques. De bons résultats sont obtenus en laboratoire en ajoutant au polymère acrylique un polymère thermoplastique qui est transparent, insoluble ou très peu dans les dissolvants organiques.

Après avoir étudié le problème du cintrage, le sollicitant considère que la cause première se trouve dans le comportement différent des deux faces du panneau lorsqu'elles ne sont pas de même nature. La cause du cintrage provient des différents coefficients de dilatation thermique, des différents coefficients d'absorption d'humidité et des différents grammages (poids/surface) des deux faces du panneau.

Pour le problème du cintrage, la solution consiste à incorporer un film sur le verso du panneau avec des rapports similaires dans les valeurs de grammage, coefficient de dilatation thermique et coefficient d'absorption d'humidité.

Pour mieux comprendre l'objet de la présente invention, une forme préférentielle de réalisation pratique est représentée sur les plans, susceptible de changements accessoires qui ne modifieront pas son fondement.

La figure 1 est une représentation schématique d'une première réalisation pratique du panneau objet de l'invention.

La figure 2 est une représentation schématique d'une deuxième réalisation pratique du panneau objet de l'invention.

La figure 3 est une représentation schématique d'une troisième réalisation pratique du panneau objet de l'invention.

Un exemple de réalisation pratique de la présente invention et non limitatif est décrit ci-après.

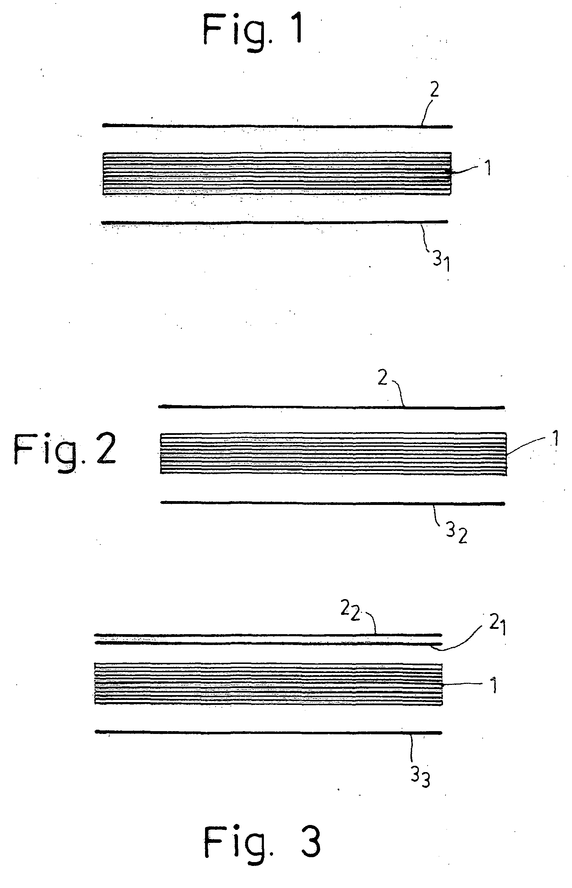

Les figures 1 et 2 exposent un panneau avec un ensemble de couches intérieures (1), par exemple un bloc de feuilles absorbantes de cellulose imprégnées de résine phénolique (kralf), lames de bois, blocs de tons, etc. dont les composants et la stratification sont connus dans l'état de la technique.

On dispose pour la face (2) extérieure d'un film en polymère de nature acrylique, par exemple l'acrylate méthacrylate ou mélange des deux, etc. y ayant ajouté un deuxième composant consistant en un polymère thermoplastique qui n'est pas ou peu soluble dans des dissolvants organiques comme l'hexane, le benzène, le toluène, l'acétate d'éthyle, etc.

Sur la figure 3, on peut apprécier : les couches intérieures (1) avec un film extérieur de nature acrylique (2₁) sur lequel a été disposé un film supplémentaire (2₂) en polymère thermoplastique, par exemple polyfluorure de vinylidène, polycarbonate, etc. de même nature que le polymère thermoplastique utilisé pour les réalisations des figures 1 et 2.

Essais 1 - On a mélangé un acrylate à 5% en poids d'une polysulfone (PSU) et on a appliqué le film résultant au panneau conventionnel. Le panneau a été soumis à 24 h/RT (24 heures d'exposition à une température ambiante) en présence d'alcool, sans apprécier de changements visibles sur la surface du film.

Le même essai a été répété avec la présence successive d'hexane, benzène et toluène, avec des résultats identiques.

Essais 2 - On a mélangé un méthacrylate à 11% en poids d'un polycarbonate (PC), reproduisant les conditions décrites dans l'essai 1 avec les mêmes résultats : absence de changements visibles sur la surface du film.

Essais 3 - On a mélangé un acrylate avec 18% de polyfluorure de vinylidène (PVDF), reproduisant les conditions décrites dans l'essai 1 et le soumettant à la présence du méthyléthylcétone. Les résultats avec PVDF ont été les meilleurs résultats de tous les essais avec le thermoplastique.

En laboratoire, le film acrylique avec un polymère thermoplastique transparent insoluble dans des dissolvants organiques, présente seulement un léger changement de brillance avec la présence du THF ou de l'acétate d'éthyle.

Il est déduit de ces essais que la présence du thermoplastique entre 5 % et 20% donne de bons résultats.

À la vue de ces résultats, le sollicitant pense qu'il n'est peut-être pas nécessaire d'ajouter le thermoplastique à l'acrylique mais qu'il serait suffisant de couvrir le film de nature acrylique (2₁) avec un film supplémentaire (2₂) du thermoplastique transparent insoluble dans les dissolvants organiques.

Cette supposition s'est avérée juste en laboratoire et le panneau a eu un comportement optimum avec deux films superficiels superposés (2₁), (2₂), l'un connu de nature acrylique et le supplémentaire du thermoplastique.

Pour que l'objet du film acrylique adhère aux couches intérieures du panneau sandwich, la surface intérieure du film acrylique est imprégnée d'une substance adhérant à la couche immédiatement antérieure au panneau sandwich.

En ce qui concerne le cintrage du panneau, on dispose au verso d'un ou de films (3) qui dans leur ensemble ont les mêmes coefficients de dilatation thermique, coefficient d'absorption d'humidité et de grammage que le film ou les films (2) utilisés sur le recto.

Sur la figure 1, on a utilisé au verso des films phénoliques (3₁), sur la figure 2 un film mélaminique (3₂) et sur la figure 3 un film en aluminium (3₃).

À titre d'exemple, citons les essais suivants :
Essai 1 - On utilise au recto un film acrylique avec 10% en poids de polyfluorure de vinylidène (PVDF) avec un grammage 68 g/m², avec un coefficient de dilatation thermique linéaire de 10 10⁻⁵ x 1/k et un coefficient d'absorption d'humidité de 0.2%. On a utilisé au verso une feuille d'aluminium de 12 µm (32 g/m²), avec un coefficient de dilatation thermique linéaire de 25 10⁻⁶ x 1/k et un coefficient d'absorption d'humidité de 0.05%. Résultat optimum.
Essai 2 - On utilise un film acrylique avec 10% en poids de polyfluorure de vinylidène (PVDF) avec un grammage 68 g/m², avec un coefficient de dilatation thermique linéaire de 10 10 ⁻⁵ x 1/k et un coefficient d'absorption d'humidité de 0.2%. On a utilisé au verso un film en polyoléfine de 50 g/m², avec un coefficient de dilatation thermique linéaire de 15 10⁻⁵ x 1/k et un coefficient d'absorption d'humidité de 0.15%. Résultat très bon.
Essai 3 - On utilise un film acrylique avec 10% en poids de polyfluorure de vinylidène (PVDF) avec un grammage 68 g/m², avec un coefficient de dilatation thermique linéaire de 10 10⁻⁵ x 1/k et un coefficient d'absorption d'humidité de 0.2%. On utilise un même film au verso. Résultat excellent.

## Revendications

1. Panneau type sandwich formé de plusieurs couches successives avec sur les deux faces un film en polymère de nature acrylique transparente, **caractérisé par le fait qu'**il a été ajouté au film en polymère de nature acrylique un thermoplastique transparent qui n'est pas ou peu soluble dans les dissolvants organiques.

2. Panneau type sandwich, selon la revendication précédente, **caractérisé par le fait que** le thermoplastique transparent est ajouté en le mélangeant avec un polymère de nature acrylique.

3. Panneau type sandwich, selon la première revendication, **caractérisé par le fait que** le thermoplastique transparent est ajouté comme un film sur le film en polymère de nature acrylique.

4. Panneau type sandwich, selon les revendications précédentes, **caractérisé par le fait que** le thermoplastique transparent est ajouté dans des proportions comprises entre 5% et 20% en poids par rapport au polymère de nature acrylique.

5. Panneau type sandwich, selon la première revendication, **caractérisé par le fait que** le thermoplastique transparent est le polyfluorure de vinylidène (PVDF).

6. Panneau type sandwich, selon la première revendication, **caractérisé par le fait que** les films superficiels des deux faces ont les mêmes coefficients de dilatation thermique, coefficient d'absorption d'humidité.

7. Panneau type sandwich, selon la sixième revendication, **caractérisé par le fait que** le film extérieur du verso est une feuille d'aluminium.

8. Panneau type sandwich, selon la sixième revendication, **caractérisé par le fait que** le film extérieur du verso est un film en polyoléfine.

9. Panneau type sandwich, selon la sixième revendication, **caractérisé par le fait que** les films superficiels des deux faces ont un même grammage.
